# EUROPEAN PATENT APPLICATION

(11) **EP 4 636 271 A1**
(43) Date of publication of application: **22.10.2025**
(21) Application number: 22968550.8
(22) Date of filing: 16.12.2022
(51) Int. Cl.: F16C 11/06, F16D 3/16

(54) **JOINT DEVICE FOR RECIPROCATING PUMP**

(71) Applicant: EBARA CORPORATION, Ota-ku, Tokyo 144-8510 (JP)
(72) Inventor: KIM, Hoechun, Tokyo 144-8510 (JP); KAWASAKI, Hiroyuki, Tokyo 144-8510 (JP); KASATANI, Tetsuji, Tokyo 144-8510 (JP); HONDA, Shuichiro, Tokyo 144-8510 (JP)
(74) Representative: Carstens, Dirk Wilhelm
(86) International application number: PCT/JP2022/046431
(87) International publication number: WO 2024/127640

(57) **Abstract**

The present invention relates to a coupling device used for driving a reciprocating pump, such as a plunger pump or a piston pump. The coupling device (1) for coupling a driving source and a reciprocating pump, includes: a first thrust member (3) having a first concave surface (3a); a second thrust member (5) having a second concave surface (5a); a sphere (7) sandwiched by the first concave surface (3a) and the second concave surface (5a); and a housing (11) having an internal space (10) in which the first thrust member (3), the second thrust member (5), and the sphere (6) are disposed, wherein the first thrust member (3) and the second thrust member (5) are aligned along a central axis CL of the housing (11), and a width of the internal space (10) is larger than a width of the first thrust (3) member, a width of the second thrust member (5), and a width of the sphere (7).

## Description

### Technical Field

The present invention relates to a coupling device used for driving a reciprocating pump, such as a plunger pump or a piston pump.

### Background Art

A reciprocating pump is coupled to a driving source (e.g., an air cylinder or a hydraulic cylinder) via a coupling device. Reciprocating motion of the driving source is transmitted to a piston of the reciprocating pump via the coupling device, so that the piston reciprocates. In order to prevent mechanical damage and extend a service life, it is ideal that a drive shaft on a driving-source side and a driven shaft on a reciprocating-pump side are aligned in a straight line. This is because such an arrangement of the drive shaft and the driven shaft can reduce performance loss, whereas shift in alignment of the drive shaft and the driven shaft may cause unintended contact between members, friction, wear, or seizing.

However, in order to align the drive shaft and the driven shaft in a straight line, a high level of machining accuracy and a great deal of effort in assembling the apparatus are required, and as a result, facilities and processes for such machining and assembly are required. Therefore, the coupling device for use in the reciprocating pump is required to have a structure that can absorb any shift between the drive shaft and the driven shaft even if an eccentricity between the drive shaft and the driven shaft (i.e., a difference in a relative position between an axis of the drive shaft and an axis of the driven shaft) or a deflection angle (i.e., a relative inclination between the drive shaft and the driven shaft) occurs.

### Citation List

### Patent Literature

Patent document 1: Japanese laid-open patent publication No. 2007-263257

### Summary of Invention

### Technical Problem

An example of the coupling device that tolerates the deflection angle between the drive shaft and the driven shaft is a universal joint. However, the universal joint does not have a structure that can bear a high thrust load transmitted from the drive shaft to the driven shaft. Therefore, if the reciprocating pump is operated for a long period of time, the universal joint may be damaged.

In addition to the deflection angle between the drive shaft and the driven shaft, the eccentricity between the drive shaft and the driven shaft may occur. Such an eccentricity is caused by a relative positional shift between the driving source and the reciprocating pump. Conventional coupling devices, such as the universal joint, cannot tolerate (or absorb) such eccentricity.

Patent document 1 discloses a coupling device that addresses a deflection angle and an eccentricity of a drive shaft and a driven shaft. This coupling device has gaps formed at top and bottom to have a margin for the deflection angle and the eccentricity. However, these gaps cause a shortened stroke length of the driven shaft compared with a stroke length of the drive shaft, thus reducing a volume of a pump. As a result, pump efficiency may decrease. In addition, members adjacent to each other in an axial direction repeatedly collide in every reciprocating motion in the axial direction, thus generating vibrations and noises. As a result, wear or fatigue failure at the collision points of the members is likely to occur.

The present invention provides a coupling device for a reciprocating pump capable of tolerating (absorbing) not only a deflection angle between a drive shaft and a driven shaft but also an eccentricity between the drive shaft and the driven shaft, and capable of improving pump efficiency.

### Solution to Problem

In an embodiment, there is provided a coupling device for coupling a driving source and a reciprocating pump, comprising: a first thrust member having a first concave surface; a second thrust member having a second concave surface; a sphere sandwiched by the first concave surface and the second concave surface; and a housing having an internal space in which the first thrust member, the second thrust member, and the sphere are disposed, wherein the first thrust member and the second thrust member are aligned along a central axis of the housing, and a width of the internal space is larger than a width of the first thrust member, a width of the second thrust member, and a width of the sphere.

In an embodiment, the first concave surface and the second concave surface are concave spherical surfaces having the same radius of curvature as that of an outer surface of the sphere.

In an embodiment, the first thrust member, the second thrust member, and the sphere are eccentric with respect to the central axis of the housing.

In an embodiment, the second thrust member has a second flat surface, and the housing has a flat seat that is in surface contact with the second flat surface.

In an embodiment, the housing is fixed to a first shaft extending from one of the driving source and the reciprocating pump, and the sphere is fixed to a second shaft extending from the other of the driving source and the reciprocating pump.

In an embodiment, the housing has a threaded hole communicating with the internal space, and a male thread portion formed on an outer circumferential surface of the first shaft is screwed into the threaded hole.

In an embodiment, the first thrust member has a first flat surface, the first flat surface being in contact with an end surface of the first shaft.

In an embodiment, the second thrust member comprises a plurality of segments that have been divided.

### Advantageous Effects of Invention

According to the present invention, there exists a margin for a range of a deflection angle and an eccentricity, with no gap in an axial direction due to the structure. Therefore, efficiency of the pump can be increased. In addition, since members adjacent to each other in an axial direction do not repeatedly collide, vibration and noise are not generated, so that wear or fatigue failure at collision points of the members may not occur. As a result, mechanical damage can be prevented, and a service life can be extended.

In addition, the first thrust member and the second thrust member that are in contact with the sphere can be tilted relative to each other. Furthermore, the width of the internal space is larger than the width of the first thrust member, the width of the second thrust member, and the width of the sphere, so that the first thrust member, the second thrust member, and the sphere can be eccentric with respect to the housing. Therefore, when the first shaft (e.g., a drive shaft) is fixed to the housing and the second shaft (e.g., a driven shaft) is fixed to the sphere, the coupling device can tolerate (absorb) both the deflection angle and the eccentricity between the first shaft and the second shaft.

### Brief Description of Drawings

[FIG. 1] FIG. 1 is a cross-sectional view showing an embodiment of a coupling device for coupling a driving source and a reciprocating pump;
[FIG. 2] FIG. 2 is a diagram illustrating a second shaft fixed to a sphere being tilted with respect to a first shaft fixed to a housing;
[FIG. 3] FIG. 3 is a diagram illustrating the second shaft fixed to the sphere being eccentric with respect to the first shaft fixed to the housing;
[FIG. 4] FIG. 4 is a schematic diagram illustrating a manner in which the coupling device and the first and second shafts coupled thereto reciprocate; and
[FIG. 5] FIG. 5 is a cross-sectional view showing another embodiment of the coupling device.

### Description of Embodiments

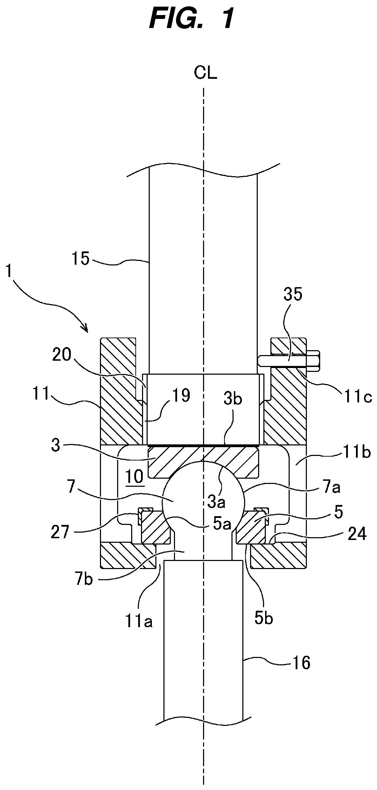

Hereinafter, embodiments of the present invention will be described in detail with reference to the drawings. FIG. 1 is a cross-sectional view showing an embodiment of a coupling device for coupling a driving source and a reciprocating pump. A coupling device 1 includes a first thrust member 3 having a first concave surface 3a, a second thrust member 5 having a second concave surface 5a, a sphere 7 sandwiched by the first concave surface 3a and the second concave surface 5a, and a housing 11 having an internal space 10 in which the first thrust member 3, the second thrust member 5, and the sphere 7 are disposed.

The first thrust member 3 and the second thrust member 5 are aligned along a central axis CL of the housing 11. More specifically, the first thrust member 3, the sphere 7, and the second thrust member 5 are aligned in line along the central axis CL of the housing 11. The first thrust member 3, the sphere 7, and the second thrust member 5 are made of a hard material, such as metal or ceramic.

The housing 11 is fixed to a first shaft 15 extending from one of a driving source (e.g., an air cylinder or a hydraulic cylinder) and a reciprocating pump (e.g., a plunger pump or a piston pump). The sphere 7 is fixed to a second shaft 16 extending from the other of the driving source and the reciprocating pump. The sphere 7 has a spherical outer surface 7a and a shaft portion 7b extending from the outer surface 7a. This shaft portion 7b extends through the second thrust member 5 to the second shaft 16. The housing 11 has a through-hole 11a through which the shaft portion 7b and the second shaft 16 extend. A width of the through-hole 11a is larger than a width (diameter) of the second shaft 16.

The housing 11 has a threaded hole 19 communicating with the internal space 10. A male thread portion 20 formed on an outer circumferential surface of the first shaft 15 is screwed into the threaded hole 19. The first thrust member 3 has a first flat surface 3b, which is in contact with an end surface of the first shaft 15 at all times. The end surface of the first shaft 15 is perpendicular to the central axis CL, and the first flat surface 3b is perpendicular to the central axis CL of the housing 11 when the first flat surface 3b is in contact with the end surface of the first shaft 15. In order to adjust a distance between the drive shaft and a piston of the reciprocating pump, a shim (or a spacer) may be disposed between the first flat surface 3b of the first thrust member 3 and the end surface of the first shaft 15.

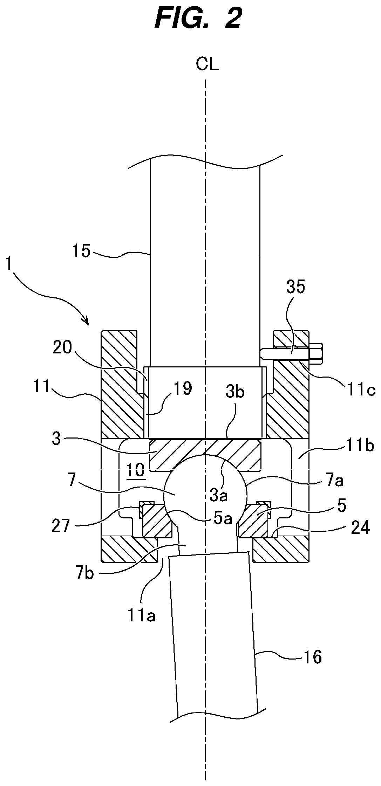

The first concave surface 3a and the second concave surface 5a are concave spherical surfaces having the same radius of curvature as a radius of curvature of the outer surface 7a of the sphere 7. The first concave surface 3a has a circular shape, and the second concave surface 5a has an annular shape with a hole formed in approximately the center of the second concave surface 5a. The sphere 7 is slidably supported by both the first concave surface 3a of the first thrust member 3 and the second concave surface 5a of the second thrust member 5. The first concave surface 3a and the second concave surface 5a are in surface contact with the outer surface 7a of the sphere 7 at all times during reciprocating motion. Therefore, the sphere 7 can tilt with respect to the housing 11, the first thrust member 3, and the second thrust member 5 while maintaining a relative position with respect to the housing 11. As a result, as shown in FIG. 2, the second shaft 16 fixed to the sphere 7 can tilt with respect to the first shaft 15 fixed to the housing 11.

In particular, according to this embodiment, the entire first concave surface 3a and the entire second concave surface 5a are in contact with the spherical outer surface 7a of the sphere 7 at all times, so that the coupling device 1 can bear a high load applied to the coupling device 1 during the reciprocating motion, and the sphere 7 can tilt smoothly with respect to the first thrust member 3 and the second thrust member 5. Furthermore, the first concave surface 3a and the second concave surface 5a are arranged so as to sandwich the sphere 7 therebetween along a direction of the central axis CL of the housing 11 (i.e., along a reciprocating direction). Therefore, the sphere 7 is supported by both the first concave surface 3a and the second concave surface 5a when the coupling device 1 moves in either direction of the reciprocating motion, so that the sphere 7 can tilt smoothly with respect to the first thrust member 3 and the second thrust member 5. As a result, the second shaft 16 fixed to the sphere 7 can tilt smoothly with respect to the first shaft 15 fixed to the housing 11 during the reciprocating motion.

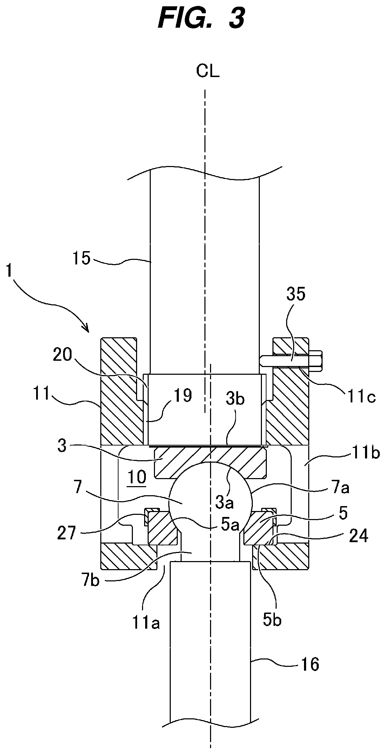

A width of the internal space 10 of the housing 11 is larger than a width of the first thrust member 3, a width of the second thrust member 5, and a width of the sphere 7. In this specification, "width" is defined as a dimension in a direction perpendicular to the central axis CL of the housing 11. As shown in FIG. 3, the first thrust member 3, the second thrust member 5, and the sphere 7 can be eccentric together with respect to the central axis CL of the housing 11. Specifically, positions of the first thrust member 3, the second thrust member 5, and the sphere 7 in the direction perpendicular to the central axis CL are variable within the internal space 10 of the housing 11. As a result, the second shaft 16 fixed to the sphere 7 can be eccentric with respect to the first shaft 15 fixed to the housing 11.

The second thrust member 5 has a second flat surface 5b, and the housing 11 has a flat seat 24 that is in surface contact with the second flat surface 5b. The second flat surface 5b is an annular surface. The second flat surface 5b and the seat 24 are perpendicular to the central axis CL of the housing 11. The second flat surface 5b and the seat 24 are in contact with each other at all times. The seat 24 just supports the second flat surface 5b, so that the seat 24 does not prevent the second thrust member 5 from positional shifting or moving in the direction perpendicular to the central axis CL of the housing 11. Both the first flat surface 3b of the first thrust member 3 and the second flat surface 5b of the second thrust member 5 are perpendicular to the central axis CL of the housing 11. As described above, the end surface of the first shaft 15, the first flat surface 3b, the first concave surface 3a, the sphere 7, the second concave surface 5a, the second flat surface 5b, and the seat 24 are each arranged so as to be in contact with adjacent member in the direction of the central axis CL at all times, so that the first flat surface 3b and the second flat surface 5b can guide positional shifting or moving of the first thrust member 3, the sphere 7, and the second thrust member 5 in the direction perpendicular to the central axis CL.

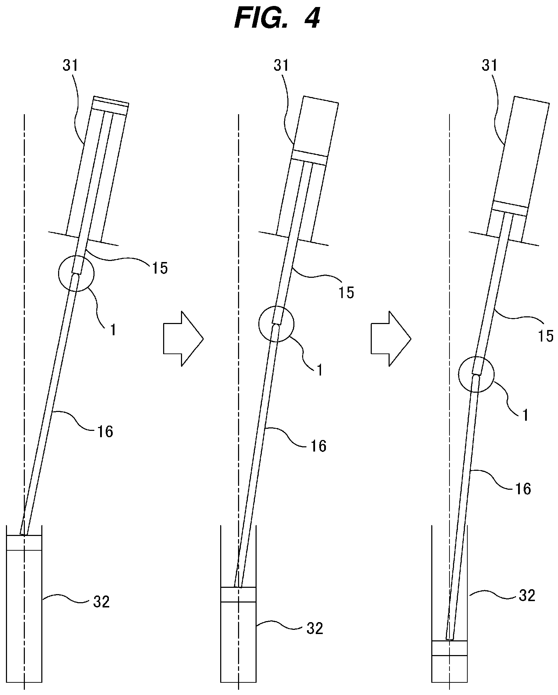

FIG. 4 is a schematic diagram illustrating a manner in which the coupling device 1 and the first and second shafts 15 and 16 coupled thereto reciprocate. In FIG. 4, the coupling device 1 is illustrated schematically. In the example shown in FIG. 4, the first shaft 15 is a drive shaft coupled to a driving source 31, and the second shaft 16 is a driven shaft coupled to a reciprocating pump 32, while the present invention is not limited to the example shown in FIG. 4.

As shown in FIG. 4, when the driving source 31 and the reciprocating pump 32 are inclined with each other, the second shaft 16 can be tilted with respect to the first shaft 15 by the coupling device 1 during reciprocating motion, so that movement of the second shaft 16 is not restricted by the reciprocating pump 32. As a result, a stroke of the reciprocating pump 32 can be increased.

Referring back to FIG. 1, in this embodiment, an annular latch 27 is attached to an upper portion of the second thrust member 5. The second thrust member 5 in this embodiment includes a plurality of segments that have been divided. The latch 27 is configured to fix relative positions of these segments. In one example, the second thrust member 5 has a two-piece structure composed of two semicircular ring segments, and relative positions of these two semicircular ring segments are fixed by the latch 27. The second thrust member 5 may be divided into three or more segments.

The housing 11 has an opening 11b formed in a side wall thereof. This opening 11b is used for maintenance and/or assembly of the first thrust member 3 and the second thrust member 5.

Next, an embodiment of a method of assembling the coupling device 1 configured as described above will be described. First, the sphere 7 to which the second shaft 16 is fixed is inserted into the internal space 10 through the through-hole 11a of the housing 11, when the first shaft 15, the first thrust member 3, and the second thrust member 5 are removed from the housing 11. The two semicircular ring segments constituting the second thrust member 5 are inserted into the internal space 10 through the opening 11b of the housing 11, and the latch 27 is then attached to the two semicircular ring segments from above the sphere 7, so that relative positions of the two semicircular ring segments are fixed to form the second thrust member 5. Next, the first thrust member 3 is inserted into the internal space 10 through the opening 11b or the threaded hole 19 of the housing 11, and is placed on the sphere 7. Furthermore, the entire housing 11 is rotated about its own central axis CL, so that the threaded hole 19 of the housing 11 is screwed onto the male thread portion 20 of the first shaft 15 until the first flat surface 3b of the first thrust member 3 is brought into contact with the end surface of the first shaft 15. A rotation-prevention screw 35 is screwed into a second threaded hole 11c formed in the side wall of the housing 11 when the first flat surface 3b of the first thrust member 3 is in contact with the end surface of the first shaft 15, so that relative positions of the housing 11 and the first shaft 15 are fixed. In this way, the assembly of the coupling device 1 is completed.

When the first thrust member 3 and/or the second thrust member 5 are to be replaced, first, the entire housing 11 is rotated in an opposite direction to separate the first flat surface 3b of the first thrust member 3 from the end surface of the first shaft 15. The first thrust member 3 can be removed through the opening 11b of the housing 11. When the second thrust member 5 is to be removed, first, the latch 27 is removed from the second thrust member 5. Thereafter, the two semicircular ring segments constituting the second thrust member 5 are removed through the opening 11b of the housing 11.

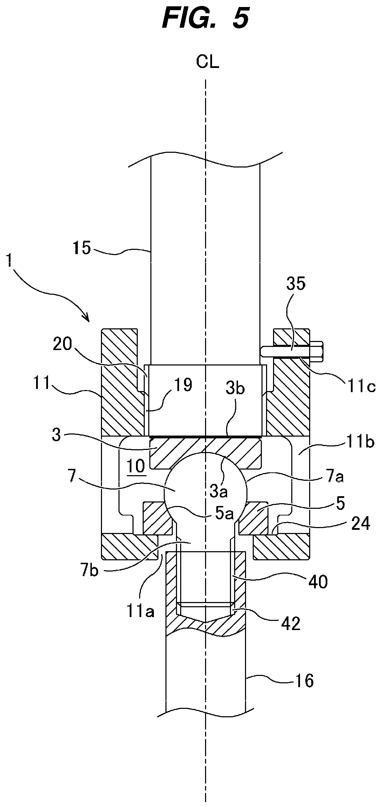

FIG. 5 is a cross-sectional view showing another embodiment of the coupling device 1. Configurations and operations of this embodiment, which will be not particularly described, are the same as those of the embodiments described with reference to FIGS. 1 to 4, and duplicated descriptions will be omitted.

As shown in FIG. 5, in this embodiment, the sphere 7 is removably fixed to the second shaft 16 with a threaded structure. More specifically, a male thread 40 is formed on the shaft portion 7b of the sphere 7, and a threaded hole 42 is formed in an end surface of the second shaft 16. The sphere 7 can be fixed to the second shaft 16 by screwing the male thread 40 of the sphere 7 into the threaded hole 42 of the second shaft 16. Furthermore, the sphere 7 can be separated from the second shaft 16 by removing the male thread 40 of the sphere 7 from the threaded hole 42 of the second shaft 16.

In the embodiment shown in FIG. 5, the second thrust member 5 is composed of a single annular member, and does not have two semicircular ring segments. Furthermore, the latch 27 shown in FIG. 1 is not provided.

An embodiment of a method of assembling the coupling device 1 according to the embodiment shown in FIG. 5 will be described. First, the second thrust member 5 and the sphere 7 are inserted into the internal space 10 of the housing 11 when the first shaft 15, the first thrust member 3, and the second thrust member 5 are removed from the housing 11 and when the sphere 7 is removed from the second shaft 16. Next, with the second thrust member 5 being located between the sphere 7 and the second shaft 16, the male thread 40 of the sphere 7 is screwed into the threaded hole 42 of the second shaft 16, so that the sphere 7 is fixed to the second shaft 16. The first thrust member 3 is inserted into the internal space 10 through the opening 11b or the threaded hole 19 of the housing 11, and is placed on the sphere 7. Furthermore, the entire housing 11 is rotated around its own central axis CL, so that the threaded hole 19 of the housing 11 is screwed onto the male thread portion 20 of the first shaft 15 until the first flat surface 3b of the first thrust member 3 is brought into contact with the end surface of the first shaft 15. The rotation-prevention screw 35 is screwed into the second threaded hole 11c formed in the side wall of the housing 11 when the first flat surface 3b of the first thrust member 3 is in contact with the end surface of the first shaft 15, so that relative positions of the housing 11 and the first shaft 15 are fixed. In this way, the assembly of the coupling device 1 is completed.

When the first thrust member 3 and/or the second thrust member 5 are to be replaced, first, the entire housing 11 is rotated in the opposite direction to separate the housing 11 from the first shaft 15. The first thrust member 3 can be removed through the opening 11b or the threaded hole 19 of the housing 11. When the second thrust member 5 is to be removed, the male thread 40 of the sphere 7 is removed from the threaded hole 42 of the second shaft 16, and the sphere 7 is separated from the second shaft 16. The sphere 7 is then removed from the housing 11, and the second thrust member 5 is removed from the housing 11.

Each of the above-described embodiments of the coupling device 1 is suitable for use in coupling a driving source to a reciprocating pump for delivering liquefied gas, such as liquid hydrogen, liquefied natural gas, liquefied ammonia, liquid nitrogen, liquefied ethylene gas, liquefied petroleum gas, etc.. In particular, as shown in FIG. 4, the coupling device 1 is disposed between the driving source 31 and the reciprocating pump 32, so that the liquefied gas having extremely low temperature in the reciprocating pump 32 can be prevented from cooling (freezing) the driving source 31.

The previous description of embodiments is provided to enable a person skilled in the art to make and use the present invention. Moreover, various modifications to these embodiments will be readily apparent to those skilled in the art, and the generic principles and specific examples defined herein may be applied to other embodiments. Therefore, the present invention is not intended to be limited to the embodiments described herein but is to be accorded the widest scope as defined by limitation of the claims.

### Industrial Applicability

The present invention is applicable to a coupling device used for driving a reciprocating pump, such as a plunger pump or a piston pump.

### Reference Signs List

- 1: coupling device
- 3: first thrust member
- 3a: first concave surface
- 3b: first flat surface
- 5: second thrust member
- 5a: second concave surface
- 5b: second flat surface
- 7: sphere
- 7a: outer surface
- 10: internal space
- 11: housing
- 11a: through-hole
- 11b: opening
- 11c: second threaded hole
- 15: first shaft
- 16: second shaft
- 19: threaded hole
- 20: male thread portion
- 24: seat
- 27: latch
- 31: driving source
- 32: reciprocating pump
- 35: rotation-prevention screw
- 40: male thread
- 42: threaded hole

## Claims

1. A coupling device for coupling a driving source and a reciprocating pump, comprising:
a first thrust member having a first concave surface;
a second thrust member having a second concave surface;
a sphere sandwiched by the first concave surface and the second concave surface; and
a housing having an internal space in which the first thrust member, the second thrust member, and the sphere are disposed,
wherein the first thrust member and the second thrust member are aligned along a central axis of the housing, and
a width of the internal space is larger than a width of the first thrust member, a width of the second thrust member, and a width of the sphere.

2. The coupling device according to claim 1, wherein the first concave surface and the second concave surface are concave spherical surfaces having the same radius of curvature as that of an outer surface of the sphere.

3. The coupling device according to claim 1 or 2, wherein the first thrust member, the second thrust member, and the sphere are eccentric with respect to the central axis of the housing.

4. The coupling device according to any one of claims 1 to 3, wherein
the second thrust member has a second flat surface, and
the housing has a flat seat that is in surface contact with the second flat surface.

5. The coupling device according to any one of claims 1 to 4, wherein
the housing is fixed to a first shaft extending from one of the driving source and the reciprocating pump, and
the sphere is fixed to a second shaft extending from the other of the driving source and the reciprocating pump.

6. The coupling device according to claim 5, wherein
the housing has a threaded hole communicating with the internal space, and
a male thread portion formed on an outer circumferential surface of the first shaft is screwed into the threaded hole.

7. The coupling device according to claim 6, wherein the first thrust member has a first flat surface, the first flat surface being in contact with an end surface of the first shaft.

8. The coupling device according to any one of claims 1 to 7, wherein the second thrust member comprises a plurality of segments that have been divided.
